# EUROPEAN PATENT APPLICATION

(11) **EP 4 818 288 A1**
(43) Date of publication of application: **07.10.2026**
(21) Application number: 25902411.5
(22) Date of filing: 02.12.2025
(51) Int. Cl.: C09K 19/52, C09K 19/54, C09K 19/60, B01J 13/14, G02F 1/1334

(54) **LIQUID CRYSTAL CAPSULE, AND CAPSULE LIQUID, OPTICAL FILM, OPTICAL DEVICE, AND VARIABLE TRANSMITTANCE DEVICE USING SAME**

(30) Priority: 10.02.2025 KR 20250016669; 28.11.2025 KR 20250186072
(71) Applicant: LG CHEM, LTD., Seoul 07336 (KR)
(72) Inventor: KIM, Yunseop, Yuseong-gu, Daejeon 34122 (KR); SEOK, Jin Ah, Yuseong-gu, Daejeon 34122 (KR); KIM, Yeji, Yuseong-gu, Daejeon 34122 (KR); KIM, Jee Seon, Yuseong-gu, Daejeon 34122 (KR)
(74) Representative: Hoffmann Eitle
(86) International application number: PCT/KR2025/020361
(87) International publication number: WO 2026/168700

(57) **Abstract**

The present invention relates to a liquid crystal capsule comprising a core containing liquid crystal; and a polymer shell formed on the surface of the core; wherein the polymer shell comprises crosslinked polyvinyl alcohol with a mediating functional group comprising a urethane-based functional group and an acetal-based functional group.

## Description

### [Technical Field]

### Cross-reference to Related Application(s)

This application claims the benefit of priority based on Korean Patent Application No. 10-2025-0016669 filed on February 10, 2025, and Korean Patent Application No. 10-2025-0186072 filed on November 28, 2025, and all contents disclosed in the documents of the corresponding Korean Patent Applications are incorporated herein by reference.

The present invention relates to a liquid crystal capsule with improved durability even at high voltage by increasing the strength of a polymer shell formed on the surface of a core, and a capsule solution, an optical film, an optical device, and a transmittance variable device using the same.

### [Background Art]

A polymer dispersed liquid crystals (PDLC) film is applicable to a high-brightness projection-type display or a high-contrast reflective display device, and is a composite material in which liquid crystal droplets of several micrometers are dispersed in a polymer between conductive films. The driving principle of PDLC is that light incident on a polymer layer in which liquid crystals are dispersed is scattered due to a difference in refractive index between the liquid crystals and the polymer, resulting in an opaque state. However, by applying an electric field thereto, the direction of the liquid crystals is aligned and the refractive index is changed, thereby controlling the scattering and transmission of light to achieve a transparent state.

As such, the PDLC device does not require a separate polarizer and thus does not structurally require a polarizing plate, and does not require an alignment process in terms of the process, and thus may be manufactured by a simple method, so that it may be applied to smart glass and smart screens for buildings and automobiles corresponding to Switchable windows, and may also be applied as a black PDLC film for transparent OLEDs. In addition, it may be manufactured in a flexible form depending on a material used as a substrate.

Specifically, a liquid crystal-based smart window refers to an active window capable of controlling transmittance by means of glass comprising a separate liquid crystal layer, and is a technology applicable to the mobility field as well as buildings. Through conventional polymer dispersed liquid crystal (PDLC) technology, it was possible to prepare liquid crystal domains having a size of several µm by mixing a monomer capable of photopolymerization or thermal polymerization and a liquid crystal and by phase separation between a polymer and a liquid crystal occurring during polymerization. The PDLC film may realize a light blocking/transmission mode as refractive indices of liquid crystals in a domain having a size of several µm match/mismatch with those of a polymer matrix according to on/off of voltage application.

In particular, when manufacturing a tinted PDLC containing a dye, problems exist such as the anisotropic dye not being uniformly aligned according to an electric field in the polymer, and in particular, a contamination problem of a polymer matrix by the dye occurs, so various studies are being conducted on a liquid crystal composite with a capsule structure, in which liquid crystals and anisotropic dyes are encapsulated in a polymer shell, and which possesses excellent mechanical physical properties and high uniformity, and may prevent contamination of the polymer matrix by the dye.

However, as the liquid crystals and the anisotropic dyes are encapsulated in a polymer shell, there was a limitation wherein a higher voltage was required to be applied to change the orientation of the liquid crystals due to increased interaction resulting from an enlarged contact area between the liquid crystals encapsulated within the capsule and a material contained within the capsule shell.

### [Detailed Description of the Invention]

### [Technical Problem]

The present invention provides a liquid crystal capsule with improved durability even at high voltage by increasing the strength of a polymer shell formed on the surface of a core.

In addition, the present invention is to provide a capsule solution manufactured using the liquid crystal capsule, an optical film, an optical device, and a transmittance variable device.

### [Technical Solution]

In order to solve the above problems, the present specification provides a liquid crystal capsule comprising a core containing liquid crystal; and a polymer shell formed on the surface of the core; wherein the polymer shell comprises polyvinyl alcohol crosslinked with a mediating functional group including a urethane-based functional group and an acetal-based functional group.

The present specification also provides a capsule solution comprising the liquid crystal capsule and a solvent.

The present specification also provides an optical film comprising a binder resin and liquid crystal domains dispersed in the binder resin, and having ΔHaze_{high voltage} of - 5% to -0.1% according to the following Equation 1. [Equation 1] $Δ {Haze}_{high voltage} = {Haze}_{1} \left(%\right) - {Haze}_{2} \left(%\right)$

In Equation 1, Haze₁ is a minimum haze value in an applied voltage range of 200V or less, and Haze₂ is a maximum haze value in an applied voltage range exceeding 100V.

The present specification also provides an optical device comprising the optical film.

The present specification also provides a transmittance variable device comprising the optical film.

Hereinafter, a liquid crystal capsule according to a specific embodiment of the invention, and a capsule solution, an optical film, an optical device, and a transmittance variable device using the same will be described in more detail.

Unless otherwise stated in the present specification, the terminology is intended only to refer to specific embodiments and is not intended to limit the present invention.

Singular forms used in the present specification include plural forms unless the phrases clearly indicate the opposite meaning.

The meaning of "comprise" used in the present specification specifies a specific characteristic, region, integer, step, operation, element, and/or component, and does not exclude the presence or addition of another specific characteristic, region, integer, step, operation, element, component, and/or group.

Further, terms including ordinal numbers such as "first" and "second" in the present specification are used for the purpose of distinguishing one component from another component, and are not limited by the ordinal numbers. For example, within the scope of protection of the present invention, a first component may also be named a second component, and similarly, a second component may be named a first component.

In the present specification, a derivative compound refers to a compound that has been modified, when a certain organic compound is used as a parent, to an extent that does not substantially alter the structure and properties of the parent, for example, by the introduction of a functional group, oxidation, reduction, or the substitution of an atom.

In the present specification, the term "substitution" means that another functional group is bonded instead of a hydrogen atom in a compound, and the position to be substituted is not limited as long as it is a position where the hydrogen atom may be substituted, i.e., a position where the substituent may be substituted, and when two or more are substituted, the two or more substituents may be the same as or different from each other.

In the present specification, the term "substituted or unsubstituted" means substituted or unsubstituted with one or more substituents selected from the group consisting of deuterium; a halogen group; a cyano group; a nitro group; a hydroxy group; a carbonyl group; an ester group; an imide group; an amide group; a primary amino group; a carboxy group; a sulfonic acid group; a sulfonamide group; a phosphine oxide group; an alkoxy group; an aryloxy group; an alkylthioxy group; an arylthioxy group; an alkylsulfoxy group; an arylsulfoxy group; a silyl group; an alkyl group; a cycloalkyl group; an alkenyl group; an aryl group; an aralkyl group; an aralkenyl group; an alkylaryl group; an alkoxysilylalkyl group; an arylphosphine group; or a heterocyclic group comprising at least one of N, O and S atoms, or substituted or unsubstituted with a substituent in which two or more of the exemplified substituents are connected. For example, "a substituent in which two or more substituents are connected" may be a biphenyl group. That is, the biphenyl group may be an aryl group, or may be interpreted as a substituent in which two phenyl groups are connected.

In the present specification, 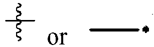 means a bond connected to another substituent, and a direct bond means that no separate atom exists in a portion represented by L. In the present specification, 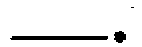 means a bond connected to another functional group.

In the present specification, alkyl is a monovalent functional group derived from an alkane, which may be a straight or branched chain, and the carbon number of the straight chain alkyl is not particularly limited but is preferably 1 to 20. In addition, the carbon number of the branched chain alkyl is 3 to 20. Specific examples of alkyl include methyl, ethyl, propyl, n-propyl, isopropyl, butyl, n-butyl, isobutyl, tert-butyl, sec-butyl, 1-methylbutyl, 1-ethylbutyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, n-heptyl, 1-methylhexyl, octyl, n-octyl, tert-octyl, 1-methylheptyl, 2-ethylhexyl, 2-propylpentyl, n-nonyl, 2,2-dimethylheptyl, 1-ethylpropyl, 1,1-dimethylpropyl, isohexyl, 4-methylhexyl, 5-methylhexyl, 2,6-dimethylheptan-4-yl and the like, but are not limited thereto. The alkyl may be substituted or unsubstituted, and examples of substituents when substituted are as described above.

In the present specification, aryl is a monovalent functional group derived from an arene, and is not particularly limited, but preferably has a carbon number of 6 to 20, and may be a monocyclic aryl group or a polycyclic aryl group. The monocyclic aryl may include phenyl, biphenyl, terphenyl, and the like, but is not limited thereto. The polycyclic aryl may include naphthyl, anthracenyl, phenanthryl, pyrenyl, perylenyl, chrysenyl, fluorenyl, and the like, but is not limited thereto. The aryl may be substituted or unsubstituted, and examples of substituents when substituted are as described above.

In the present specification, alkylene is a divalent functional group derived from an alkane, and the description of the alkyl described above may be applied thereto except that it is a divalent functional group. For example, as a straight-chain type or a branched type, it may be methylene, ethylene, propylene, isobutylene, sec-butylene, tert-butylene, pentylene, hexylene, or the like. The alkylene may be substituted or unsubstituted, and examples of substituents when substituted are as described above.

In the present specification, arylene is a divalent functional group derived from an arene, and the description of the aryl described above may be applied thereto except that it is a divalent functional group. For example, it may be phenylene, biphenylene, terphenylene, naphthylene, fluorenylene, pyrenylene, phenanthrenylene, perylenylene, tetracenylene, anthracenylene, or the like. The arylene may be substituted or unsubstituted, and examples of substituents when substituted are as described above.

In the present specification, a weight average molecular weight means a weight average molecular weight of a polystyrene equivalent measured by a GPC method. In a process of measuring the weight average molecular weight of the polystyrene equivalent measured by the GPC method, a commonly known analytical device and a detector such as a Refractive Index Detector and an analytical column may be used, and commonly applied temperature conditions, a solvent, and a flow rate may be applied. As specific examples of the measurement conditions, using a Waters PL-GPC220 instrument with a Polymer Laboratories PLgel MIX-B 300 mm long column, the evaluation temperature was 160 °C, 1,2,4-trichlorobenzene was used as a solvent, the flow rate was 1 mL/min, the sample was prepared at a concentration of 10 mg/10 mL and then supplied in an amount of 200 µL, and a value of Mw may be obtained using a calibration curve formed using polystyrene standards.

Hereinafter, the present invention will be described in more detail.

### 1. liquid crystal capsule

According to an embodiment of the invention, a liquid crystal capsule comprising a core containing liquid crystal; and a polymer shell formed on the surface of the core; wherein the polymer shell comprises crosslinked polyvinyl alcohol with a mediating functional group comprising a urethane-based functional group and an acetal-based functional group may be provided.

The present inventors confirmed through experiments that, similar to the liquid crystal capsule of an embodiment, as a polymer shell formed on the surface of a core comprises polyvinyl alcohol crosslinked with a mediating functional group comprising a urethane-based functional group and an acetal-based functional group, durability may be improved by increasing the strength of the polymer shell formed on the surface of the core, and thereby completed the invention.

Specifically, the liquid crystal capsule of said one embodiment may comprise a core containing liquid crystal. The liquid crystal capsule structure according to the present invention is characterized in that it contains liquid crystal encapsulated within a shell made of a polymer. Due to this, uniformity of liquid crystal particles may be improved.

The liquid crystal is not particularly limited, but nematic liquid crystal, smectic liquid crystal, cholesteric liquid crystal, chiral nematic liquid crystal, and the like may be mentioned. Specific types of liquid crystal compounds are not limited, and various conventionally known liquid crystals may be used without limitation. The liquid crystal compound is not particularly limited, but may be composed of a fluorine-based or cyano-based material, or a mixture thereof.

Meanwhile, the core may further comprise an emulsifier. The emulsifier is a surfactant used to form liquid crystal droplets, and by increasing the surface energy in contact with the liquid crystal, thereby causing the liquid crystal arrangement to change to radial, vertical alignment of the liquid crystal is induced, and thus a high transmittance variation rate may be induced even at a lower voltage.

The emulsifier may comprise an acetylenic diol-based compound. The acetylenic diol-based compound may comprise an acetylenic diol compound or a derivative thereof. More specifically, the acetylenic diol-based compound may comprise an acetylenic diol derivative compound comprising an ethylene oxide repeating unit within its molecule. A specific example of the acetylenic diol derivative compound comprising an ethylene oxide repeating unit within its molecule may be Ethoxylated tetramethyl decynediol.

In addition, the emulsifier may comprise a polyglyceryl monoester compound or a polyglyceryl diester compound. The polyglyceryl monoester compound may refer to a compound having one ester group in the molecule among ester compounds derived from the polyglyceryl. In addition, the polyglyceryl diester compound may refer to a compound having two ester groups in the molecule among ester compounds derived from the polyglyceryl.

The polyglyceryl monoester compound or the polyglyceryl diester compound may have a weight average molecular weight of 3000 g/mol or less, or 2000 g/mol or less, or 1500 g/mol or less, or 1300 g/mol or less, or 100 g/mol or more, or 900 g/mol or more, or 100 g/mol to 3000 g/mol, or 100 g/mol to 2000 g/mol, or 100 g/mol to 1500 g/mol, or 100 g/mol to 1300 g/mol, or 900 g/mol to 3000 g/mol, or 900 g/mol to 2000 g/mol, or 900 g/mol to 1500 g/mol, or 900 g/mol to 1300 g/mol, or 1200 g/mol to 1300 g/mol. When the weight average molecular weight of the polyglyceryl monoester compound or the polyglyceryl diester compound is excessively increased, it may interfere with movement of liquid crystal molecules, and may cause a high voltage and a low haze variation rate.

The polyglyceryl monoester compound or the polyglyceryl diester compound may be a reaction product of polyglyceryl and carboxylic acid.

In addition, the carboxylic acid may be an unsubstituted carboxylic acid. That is, no other functional group (for example, a hydroxyl group) is bonded to the carboxylic acid in place of a hydrogen atom within the compound.

Specifically, the carboxylic acid may have a hydroxy group content of less than 0.001 mol% based on 100 mol% of the carboxylic acid. That is, the carboxylic acid may not contain a hydroxy group, or may contain it in an extremely trace amount. When the hydroxy group content of the carboxylic acid, based on 100 mol% thereof, increases to 0.001 mol% or more, it may interfere with movement of liquid crystal molecules, causing a high voltage and a low haze variation rate.

The carboxylic acid may be a saturated carboxylic acid or an unsaturated carboxylic acid. The unsaturated carboxylic acid is a carboxylic acid containing a carbon-carbon double bond in the molecule, and the saturated carboxylic acid is a carboxylic acid not containing a carbon-carbon double bond in the molecule.

The carboxylic acid may have a carbon number of 10 to 30, or 10 to 20, or 13 to 19, or 13 to 15, or 17 to 19.

As specific examples of the carboxylic acid, oleic acid, myristic acid, or stearic acid may be mentioned.

More specifically, the polyglyceryl monoester compound may be one or more compounds selected from the group consisting of polyglyceryl monooleate, polyglyceryl monomyristate, and polyglyceryl monostearate. That is, the polyglyceryl monoester compound may be polyglyceryl monooleate, polyglyceryl monomyristate, polyglyceryl monostearate, or a mixture of two or more thereof.

As a more specific example, the polyglyceryl monoester compound may be one selected from the group consisting of polyglyceryl-10 monooleate, polyglyceryl-10 monomyristate, polyglyceryl-10 monostearate, and mixtures of any two or more thereof.

In addition, the polyglyceryl diester compound may be one or more compounds selected from the group consisting of polyglyceryl dioleate, polyglyceryl dimyristate, and polyglyceryl distearate. That is, the polyglyceryl diester compound may be polyglyceryl dioleate, polyglyceryl dimyristate, polyglyceryl distearate, or a mixture of two or more thereof.

As a more specific example, the polyglyceryl diester compound may be polyglyceryl-10 dioleate, polyglyceryl-10 dimyristate, polyglyceryl-10 distearate, or a mixture of two or more thereof.

Meanwhile, the content of the emulsifier may be 0.1 parts by weight to 50 parts by weight, or 0.1 parts by weight to 20 parts by weight, or 0.5 parts by weight to 20 parts by weight, or 1 part by weight to 20 parts by weight, or 5 parts by weight to 11 parts by weight based on 100 parts by weight of the liquid crystal. When the content of the emulsifier is excessively reduced based on 100 parts by weight of the liquid crystal, there is a limitation that it is difficult to sufficiently induce a high transmittance variation rate even at a lower voltage due to the insufficient induction of vertical alignment of the liquid crystal by the emulsifier. In addition, when the content of the emulsifier is excessively increased based on 100 parts by weight of the liquid crystal, there may occur a problem that excessive emulsifiers form colloidal micelles and the surface tension of the solution rapidly drops.

Meanwhile, the core may further comprise an anisotropic dye. The anisotropic dye is not particularly limited as long as it is a dopable anisotropic dye, and specifically, it may be S-428, M-483, M412 (Mitsui FineChemical) or the like.

Meanwhile, the core may further comprise a siloxane-based additive. The siloxane-based additive is an additive capable of lowering interfacial tension of liquid crystals. Accordingly, the liquid crystal capsule in which the siloxane-based additive and the liquid crystal are contained together in the core may sufficiently lower surface anchoring energy of the liquid crystal in the capsule.

The siloxane-based additive may have a molar mass of 500 g/mol or less, or 100 g/mol to 500 g/mol. The siloxane-based additive may comprise a trisiloxane-based compound. The trisiloxane-based compound may comprise a trisiloxane compound or a derivative thereof. As a specific example, the siloxane-based additive may be octamethyltrisiloxane or hexamethylcyclotrisiloxane.

In particular, the content of the siloxane-based additive may be 0.1 parts by weight to 50 parts by weight, or 0.1 parts by weight to 20 parts by weight, or 0.5 parts by weight to 20 parts by weight, or 0.5 parts by weight to 10 parts by weight, or 0.9 parts by weight to 1 part by weight based on 100 parts by weight of the liquid crystal. When the content of the siloxane-based additive is excessively reduced based on 100 parts by weight of the liquid crystal, the effect of lowering the surface tension of the liquid crystal by the siloxane-based additive may not be sufficiently implemented, so there is a limitation wherein the surface anchoring energy of the liquid crystal in the capsule cannot be sufficiently lowered. In addition, when the content of the siloxane-based additive is excessively increased based on 100 parts by weight of the liquid crystal, there may occur a problem that the liquid crystal state (mesophase state) may be changed to an isotropic liquid state.

Meanwhile, the liquid crystal capsule of the embodiment may comprise a polymer shell formed on the surface of the core. The shell may be a single-layer shell made of a single polymer material, or may be a double-layer shell or a multi-layer shell having more than two layers, the layers of which are made of different polymer materials, for improved mechanical properties and particle uniformity. Accordingly, the uniformity of liquid crystal particles may be improved, and a contamination problem due to a dye may be improved at the same time.

The polymer shell may comprise polyvinyl alcohol crosslinked by mediating functional groups, wherein the mediating functional groups include a urethane-based functional group and an acetal-based functional group. That is, the polymer shell may comprise a polymer in which two or more polyvinyl alcohols are crosslinked through an acetal-based functional group and a urethane-based functional group. As the polymer shell formed on the surface of the core comprises crosslinked polyvinyl alcohol mediating through an acetal-based functional group and a urethane-based functional group, durability may be improved by increasing the strength of the polymer shell formed on the surface of the core.

The acetal-based functional group and the urethane-based functional group do not bond to each other and may crosslink polyvinyl alcohol independently from each other. Specifically, a first polyvinyl alcohol may be bonded to one end of the acetal-based functional group, and a second polyvinyl alcohol may be bonded to the other end. In addition, a first polyvinyl alcohol may be bonded to one end of the urethane-based functional group, and a second polyvinyl alcohol may be bonded to the other end.

The urethane-based functional group may crosslink polyvinyl alcohol. Specifically, a first polyvinyl alcohol is bonded to one end of the urethane-based functional group, and a second polyvinyl alcohol may be bonded to the other end.

The urethane-based functional group refers to a functional group in which at least one urethane group is contained in the functional group structure, and a specific example of the urethane-based functional group may be a functional group represented by the following Chemical Formula 1.

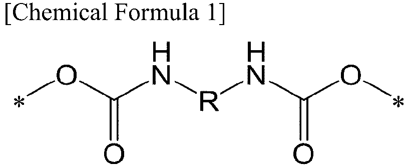

In the Chemical Formula 1, R may be an alkylene group having 1 to 10 carbon atoms or an arylene group having 6 to 20 carbon atoms.

The acetal-based functional group refers to a functional group in which at least one acetal group is contained in a functional group structure, and specific examples of the acetal-based functional group may include a diacetal group. The diacetal group is a functional group in which two acetal groups are contained in the functional group structure.

For example, a specific functional group structure of the diacetal group may be a functional group represented by the following Chemical Formula 2. The functional group represented by the following Chemical Formula 2 may be a functional group derived from glyoxal.

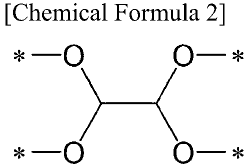

Regarding the type of the polyvinyl alcohol, there is no particular limitation, and various polyvinyl alcohols having different molecular weights or degrees of saponification may be appropriately selected according to the purpose.

More specifically, the polymer shell may comprise a reaction product of polyvinyl alcohol and a crosslinking agent. The crosslinking agent may comprise a polyaldehyde and a polyisocyanate.

As specific examples, the polyaldehyde may be glyoxal. In addition, the polyisocyanate may be a diisocyanate. Examples of the diisocyanate are not particularly limited, but for example, hexamethylene diisocyanate (HDI) or isophorone diisocyanate (IPDI) may be mentioned.

For example, the polymer shell may comprise a reaction product obtained by reacting polyvinyl alcohol, glyoxal, and hexamethylene diisocyanate. An example of a crosslinked repeating unit structure contained in the reaction product obtained by reacting polyvinyl alcohol, glyoxal, and hexamethylene diisocyanate may be represented by the following Chemical Formula 3.

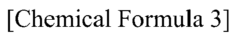

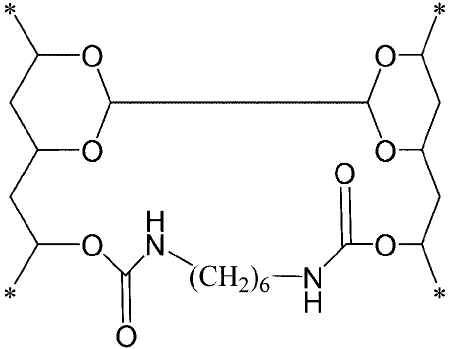

Meanwhile, the liquid crystal capsule may be a group of individual particles having an average diameter of 0.1 µm or more, or 0.1 µm to 500 µm, and individual microparticles included in such a group may have an average diameter of 0.1 µm or more, or 0.1 µm to 500 µm. More specifically, 95% or 99% of individual microparticles included in the group may have a diameter of 0.1 µm or more, or 0.1 µm to 500 µm.

The present application also provides a use of the liquid crystal capsule. The liquid crystal capsule of the present application may be used in various optical modulation devices to which liquid crystals are applicable. Therefore, the present application provides an optical modulation device comprising a substrate and a liquid crystal layer formed on one surface of the substrate and comprising the liquid crystal capsule. Manufacturing methods and types of the optical modulation device are well known in the art, and the optical modulation device may be manufactured using known manufacturing methods without limitation. The optical modulation device includes, but is not limited to, a smart window, an isotropic film, a polarization control film, or a flexible LCD.

A method of manufacturing the liquid crystal capsule is not particularly limited, and various conventionally known methods of manufacturing a liquid crystal capsule may be applied without limitation. However, for example, the method includes a process of (1) preparing a mixed solution, formed by mixing a mixed material containing liquid crystals, an emulsifier, and polyvinyl alcohol (PVA) into a solvent, (2) a process of forming droplets from the mixed solution, (3) a process of disposing polyvinyl alcohol (PVA) around the droplets, and (4) a process of manufacturing a liquid crystal capsule containing liquid crystals in a polymer shell by performing a crosslinking reaction of the polyvinyl alcohol (PVA) using a crosslinking agent to form a polymer shell surrounding the liquid crystals.

In the process of (1) preparing a mixed solution formed by mixing a mixed material containing liquid crystals, an emulsifier, and polyvinyl alcohol (PVA) into a solvent, the solvent is not particularly limited and may be appropriately selected according to the purpose, and examples thereof include pure water, such as ion-exchanged water, ultrafiltered water, reverse osmosis water, and distilled water; or ultrapure water. Additives may be further added as necessary.

In the process of (1) preparing a mixed solution formed by mixing a mixed material comprising liquid crystals, an emulsifier, and polyvinyl alcohol (PVA) into a solvent, examples of methods of mixing the liquid crystals, the emulsifier, the polyvinyl alcohol (PVA), and the additives with the solvent are not significantly limited, and various methods used in conventionally known emulsification reactions may be applied without limitation. However, for example, a method of mixing a liquid crystal mixture comprising liquid crystals and an additive (crosslinking agent) with a solution comprising a solvent, an emulsifier, and polyvinyl alcohol may be used, but is not limited thereto.

In the process of (2) forming droplets from the mixed solution, the droplets are dispersed in a dispersion medium, and more specifically, the droplets are dispersed in the dispersion medium in a state in which the surroundings of the liquid crystals are covered with an emulsifier.

As a method of preparing the droplets, a method of preparing the droplets using a dispersion-type emulsification device may be mentioned.

As the dispersion-type emulsification device, there is no particular limitation as long as droplets of a desired particle size may be obtained, and it may be appropriately selected according to the purpose, and for example, even a homomixer, which is an apparatus for mixing liquids, or a homogenizer, which is an apparatus for miniaturizing and uniformizing particles, may be used. In addition, the dispersion method is not particularly limited, and for example, any dispersion method among stirring, ultrasound, and high pressure may be used.

In the present invention, as a dispersion-type emulsification apparatus, for example, various dispersion-type emulsification apparatuses such as a high-speed homogenizer, an ultrasonic homogenizer, a high-pressure homogenizer, and a homomixer may be used.

In addition, a more preferred embodiment of the process of preparing droplets includes a droplet preparation process comprising a first preparation process of preparing droplets using a first dispersion-type emulsification device and a second preparation process of preparing droplets having a particle size smaller than that obtained in the first preparation process using a second dispersion-type emulsification device.

As the first and second dispersion-type emulsification devices, there is no particular limitation as long as droplets of a desired particle size may be obtained, and for example, various dispersion-type emulsification devices such as the above-mentioned high-speed homogenizer, ultrasonic homogenizer, high-pressure homogenizer, and homomixer may be appropriately combined and used.

In the process of (3) disposing polyvinyl alcohol (PVA) around the said droplets, coacervation, in which PVA gathers around the liquid crystal composition, may proceed in a droplet dispersion at a predetermined temperature. For example, it is preferable to set the solution temperature of the droplet dispersion in the coacervation process to room temperature or higher.

In the process of (4) manufacturing a liquid crystal capsule containing liquid crystals within a polymer shell by performing a crosslinking reaction of polyvinyl alcohol (PVA) using a crosslinking agent to form a polymer shell surrounding the liquid crystals, the crosslinking reaction is preferably performed under acidic conditions. As the acidic conditions, the pH is preferably in a range of 1 to 5, and more preferably about 3.

### 2. capsule solution

Meanwhile, according to another embodiment of the invention, a capsule solution comprising the liquid crystal capsule of the one embodiment and a solvent may be provided. The content regarding the liquid crystal capsule comprises the content described above with respect to the one embodiment.

The solvent is not particularly limited and may be appropriately selected according to the purpose, and examples thereof include pure water, such as ion-exchanged water, ultrafiltered water, reverse osmosis water, and distilled water; or water, such as ultrapure water.

The capsule solution contains liquid crystal capsules dispersed in the solvent. That is, the capsule solution may be a liquid crystal capsule dispersion. The capsule solution may also be used as a coating liquid for forming a liquid crystal layer. For example, the liquid crystal layer is formed by applying the capsule solution onto a support substrate and forming a film.

### 3. an optical film

Meanwhile, according to still another embodiment of the invention, an optical film comprising a binder resin and liquid crystal domains dispersed in the binder resin, and having ΔHaze_{high voltage} of -5% to -0.1% according to the following Equation 1 may be provided. [Equation 1] $Δ {Haze}_{high voltage} = {Haze}_{1} \left(%\right) - {Haze}_{2} \left(%\right)$

In Equation 1, Haze₁ is a minimum haze value at an applied voltage of 200V or less, and Haze₂ is a maximum haze value at an applied voltage exceeding 100V.

Specifically, the optical film may comprise a binder resin. The binder resin may act as a binder for fixing the liquid crystal domains while dispersing the liquid crystal domains in the optical film.

Although the content of the binder resin is not particularly limited, for example, various transparent materials widely used in the field of optical films may be used as the binder resin without limitation. Specific examples of the binder resin are not particularly limited, but for example, the binder resin may be selected from the group consisting of polyvinyl alcohol, polyurea, polyurethane, polyamide including nylon, polyacetal, and polyester.

Meanwhile, the optical film may comprise liquid crystal domains dispersed in the binder resin. The liquid crystal domain refers to a region containing liquid crystals within the optical film. As liquid crystals form domains trapped in certain regions within the optical film, the liquid crystal domains may be more stably dispersed in the binder resin and may have durability during a filming process. This is because the liquid crystal domains are derived from liquid crystal capsules comprising a core containing liquid crystal and a polymer shell formed on the surface of the core.

The liquid crystal domains may be two or more in number, and each of the two or more liquid crystal domains may have an independent region. Two or more liquid crystal domains may be dispersed in the optical film, and each of the two or more liquid crystal domains may have an independent region without overlapping each other. Accordingly, the liquid crystal domains may be more stably dispersed in the binder resin and have durability in a film-forming process.

The liquid crystal domain may comprise liquid crystals and an emulsifier. The content regarding the liquid crystals and the emulsifier may include all of the contents described above in the one embodiment.

Specifically, the liquid crystal domains comprise liquid crystals and an emulsifier, and the emulsifier may comprise an acetylenic diol-based compound. That is, the optical film of the other embodiment may be derived from a liquid crystal capsule comprising a core containing liquid crystals and an emulsifier; and a polymer shell formed on the surface of the core, wherein the polymer shell comprises crosslinked polyvinyl alcohol with a mediating functional group comprising a urethane-based functional group and an acetal-based functional group, and wherein the emulsifier comprises an acetylenic diol-based compound.

In addition, the liquid crystal domains comprise liquid crystals and an emulsifier, and the emulsifier may comprise a polyglyceryl monoester compound or a polyglyceryl diester compound. That is, the optical film of the other embodiment may be derived from a liquid crystal capsule comprising a core containing liquid crystals and an emulsifier, and a polymer shell formed on the surface of the core, wherein the polymer shell comprises crosslinked polyvinyl alcohol with a mediating functional group comprising a urethane-based functional group and an acetal-based functional group, and wherein the emulsifier comprises a polyglyceryl monoester compound or a polyglyceryl diester compound.

Meanwhile, the liquid crystal domain may further comprise an anisotropic dye. The content regarding the anisotropic dye may include all of the contents described above in the one embodiment.

In addition, the liquid crystal domains may further comprise a siloxane-based additive. The content regarding the siloxane-based additive may include all of the details described above in the said one embodiment.

The average diameter of the liquid crystal domain may be 100 nm to 300 nm. That is, the liquid crystal domain may be a liquid crystal nano domain. When the average diameter of the liquid crystal domain is excessively reduced, there is a problem that driving voltage increases and power consumption increases. In addition, when the average diameter of the liquid crystal domain is excessively increased, visible light is scattered, resulting in a problem of high haze.

The liquid crystal domain may be a group of individual microparticles having an average diameter of 100 nm to 300 nm, and individual microparticles included in such a group may have a diameter of 100 nm to 300 nm on average. More specifically, 95% or 99% of individual microparticles included in the group may have a diameter of 100 nm to 300 nm.

The liquid crystal domains may be derived from the liquid crystal capsule according to the one embodiment or the liquid crystal capsule solution according to the other embodiment.

As a more specific example, the optical film may be formed by applying the capsule solution of the other embodiment onto a support substrate and forming a film.

In addition, the ΔHaze_{high voltage} of the optical film according to Equation 1 may be -5% to -0.1%, or -2% to -0.1%, or -1% to -0.1%, or -0.7% to -0.1%, or -1.5% to -0.7%, or -1.5% to -0.8%, or -1.5% to -0.9%, or -1.2% to -0.7%, or -1.2% to -0.8%, or -1.2% to -0.9%, or -1.0% to -0.7%, or -1.0% to -0.8%, or -1.0% to -0.9%. [Equation 1] $Δ {Haze}_{high voltage} = {Haze}_{1} \left(%\right) - {Haze}_{2} \left(%\right)$

In Equation 1, Haze₁ is the minimum haze value in the range of applied voltage of 200V or less, and Haze₂ is the maximum haze value in the range of applied voltage exceeding 100V.

As the optical device has a ΔHaze_{high voltage} value in the above-described range, the optical device may implement an excellent haze variation rate by maintaining durability without the capsule bursting even at high voltage. The method for measuring the haze is not restricted, and various methods widely known in the field of conventional liquid crystal-containing optical devices may be applied without limitation. However, for example, it may be measured through a haze meter (Nippon Denshoku Co., Ltd., NDH7000) while applying a voltage through a function generator.

For detailed content on the optical film, content on various conventionally known optical films may be applied without limitation. For example, various contents widely known in the conventional film field may all be applied without limitation to the content regarding the structure, composition, manufacturing method, physical properties, use, and the like of the optical film.

However, as an example, the optical film may be used in a transmittance variable film.

### 4. an optical device

Meanwhile, according to still another embodiment of the invention, an optical device comprising the optical film of the other embodiment may be provided. The content regarding the optical film includes the content described above with respect to the other embodiment.

For the content on the optical device, various conventionally known optical devices may be applied without limitation. For example, various contents widely known in the conventional display field may all be applied without limitation to the specific structure, size, manufacturing method, physical properties, use, and the like of the optical device.

However, as an example, the optical device may be an optical modulation device comprising the optical film of the other embodiment. A specific example of the optical modulation device is not particularly limited, but may include, for example, a smart window, an isotropic film, a polarization control film, or a liquid crystal display device, an organic light emitting display device, or the like.

More specifically, as an example of the optical device, there may be mentioned a liquid crystal display device having a set of substrates disposed oppositely, electrodes formed on one or both of opposite surfaces of each of the set of substrates, a liquid crystal layer disposed between the substrates and formed by applying the liquid crystal capsule solution of the present invention, and an electric field applying means for applying an electric field to the liquid crystal capsule of the present invention in the liquid crystal layer via the electrodes.

In addition, the ΔHaze_{high voltage} of the optical device according to Equation 1 may be -5% to -0.1%, or -2% to -0.1%, or -1% to -0.1%, or -0.7% to -0.1%, or -1.5% to -0.7%, or -1.5% to -0.8%, or -1.5% to -0.9%, or -1.2% to -0.7%, or -1.2% to -0.8%, or -1.2% to -0.9%, or -1.0% to -0.7%, or -1.0% to -0.8%, or -1.0% to -0.9%. [Equation 1] $Δ {Haze}_{high voltage} = {Haze}_{1} \left(%\right) - {Haze}_{2} \left(%\right)$

In Equation 1, Haze₁ is the minimum haze value in the applied voltage range of 200V or less, and Haze₂ is the maximum haze value in the applied voltage range exceeding 100V.

As the optical device has a ΔHaze_{high voltage} value in the above-described range, the optical device may implement an excellent haze variation rate by maintaining durability without the capsule bursting even at high voltage. The method for measuring the haze is not limited, and various methods widely known in the field of conventional liquid crystal-containing optical devices may be applied without limitation. For example, it may be measured through a haze meter (Nippon Denshoku Co., Ltd., NDH7000) while applying a voltage through a function generator.

### 5. Transmittance Variable Device

Meanwhile, according to still another embodiment of the invention, a transmittance variable device comprising the optical film of the other embodiment may be provided. The content regarding the optical film includes the content described above with respect to the other embodiment.

For the content on the transmittance variable device, various conventionally known transmittance variable devices may be applied without limitation. For example, all details concerning the specific structure, size, manufacturing method, physical properties, use, and the like of the transmittance variable device may be applied without limitation, drawing from various widely known aspects in the conventional liquid crystal capsule field. However, as an example, a transmittance variable device may include a polarizing layer and a transmittance variable layer, and the polarizing layer or the transmittance variable layer may contain the dichroic dye of the one embodiment as a light modulating material.

The transmittance variable apparatus of the present application may be applied to any device to which variable transmittance may be applied. For example, the transmittance variable apparatus of the present application may be applied to a sunroof, automobile glass, goggles, sunglasses, a helmet, or the like to provide a transmittance variable device. As long as the transmittance variable device includes the transmittance variable apparatus of the present application, other components or structures and the like are not particularly limited, and all contents known in this field may be appropriately applied.

### [Effects of the Invention]

According to the present invention, a liquid crystal capsule with improved durability even at high voltage by increasing the strength of a polymer shell formed on the surface of a core, and a capsule solution, an optical film, an optical device, and a transmittance variable device using the same may be provided.

### [Mode for Carrying Out the Invention]

The invention will be described in more detail in the following examples. However, the following examples are merely illustrative of the present invention, and the content of the present invention is not limited by the following examples.

### <Example: Preparation of Liquid Crystal Capsule and Capsule Solution>

### Example 1

0.25 g of Ethoxylated tetramethyl decynediol (EO 1.3 mol; CAS number: 9014-85-1) as an emulsifier was added to an aqueous solution in which 0.65 g of polyvinyl alcohol (PVA) and 46.5 g of water were mixed, and dissolved by stirring. Thereafter, a mixture of 0.02 g of hexamethylene diisocyanate (HDI) and 2.3 g of liquid crystal was added, and emulsification was performed at 4,000 rpm for 30 minutes through an IKA homogenizer T25 to form droplets.

Thereafter, under stirring, the temperature of the solution was raised to 40 °C, and PVA was adsorbed onto the droplet surface for 18 hours.

Thereafter, 0.4 g of a 40% glyoxal aqueous solution was added as a crosslinking agent, and the pH of the solution was adjusted to 3, thereby crosslinking the adsorbed PVA at 40 °C for 18 hours.

After concentrating the solution with a rotary evaporator for 1 hour, a capsule solution containing liquid crystal capsules was obtained.

### Example 2

0.5 g of Ethoxylated tetramethyl decynediol (EO 1.3 mol; CAS number: 9014-85-1) as an emulsifier was added to an aqueous solution in which 1.3 g of polyvinyl alcohol (PVA) and 93.6 g of water were mixed, and dissolved by stirring. Thereafter, a mixture of 0.05 g of isophorone diisocyanate (IPDI) and 4.6 g of liquid crystal was added, and emulsification was performed at 6,000 rpm for 30 minutes through an IKA homogenizer T25 to form droplets.

Thereafter, under stirring, the temperature of the solution was raised to 40 °C, and PVA was adsorbed onto a droplet surface for 18 hours at 40 °C.

Thereafter, 0.8 g of a 40% glyoxal aqueous solution was added as a crosslinking agent, and the pH of the solution was adjusted to 3, whereby the adsorbed PVA was crosslinked at 40 °C for 18 hours.

After concentrating the solution with a rotary evaporator for 2 hours, a capsule solution containing liquid crystal capsules was obtained.

### Example 3

0.25 g of polyglyceryl-10 monooleate (Cas number: 79665-93-3; weight average molecular weight: 1203.399 g/mol) as an emulsifier was added to an aqueous solution in which 0.65 g of polyvinyl alcohol (PVA) and 46.8 g of water were mixed, and dissolved by stirring. Thereafter, a mixture of 0.05 g of hexamethylene diisocyanate (HDI) and 2.3 g of liquid crystal was added, and emulsification was performed at 6,000 rpm for 30 minutes through an IKA homogenizer T25 to form droplets.

Thereafter, under stirring, the temperature of the solution was raised to 40 °C, and PVA was adsorbed onto a droplet surface for 18 hours at 40 °C.

Thereafter, 1.6 g of a 40% glyoxal aqueous solution was added as a crosslinking agent, and the pH of the solution was adjusted to 3, and the adsorbed PVA was crosslinked at 40 °C for 18 hours.

After concentrating the solution with a rotary evaporator for 1 hour, a capsule solution containing liquid crystal capsules was obtained.

### Example 4

A liquid crystal capsule and a capsule solution were manufactured in the same manner as in Example 3, except that polyglyceryl-10 monomyristate (Cas number: 87390-32-7; weight average molecular weight: 969.16 g/mol) was added instead of polyglyceryl-10 monooleate (Cas number: 79665-93-3; weight average molecular weight: 1203.399 g/mol) as an emulsifier.

### Example 5

Liquid crystal capsules and a capsule solution were manufactured in the same manner as in Example 3, except that polyglyceryl-10 monostearate (Cas number: 79777-30-3; weight average molecular weight: 1025.3 g/mol) was added instead of polyglyceryl-10 monooleate (Cas number: 79665-93-3; weight average molecular weight: 1203.399 g/mol) as an emulsifier.

### <Comparative Example: Preparation of Liquid Crystal Capsule and Capsule Solution>

### Comparative Example 1

To an aqueous solution prepared by mixing 1.3 g of polyvinyl alcohol (PVA) and 93.6 g of water, 0.5 g of polyglyceryl-3 polyricinoleate (Cas number: 68936-89-0; weight average molecular weight: 3054 g/mol) as an emulsifier was added, and the mixture was stirred until dissolved. Thereafter, 4.6 g of liquid crystals (dielectric anisotropy (Δε) 15.8, refractive index anisotropy (Δn) 0.2235) was added, followed by emulsification at 6,000 rpm for 30 minutes using an IKA homogenizer T25 to form droplets.

Thereafter, under stirring, the temperature of the solution was raised to 40 °C, and PVA was adsorbed onto the droplet surface for 18 hours.

Thereafter, 1.6 g of a 40% glyoxal aqueous solution was added as a crosslinking agent, and the pH of the solution was adjusted to 3, and the adsorbed PVA was crosslinked at 40 °C for 18 hours.

After concentrating the solution with a rotary evaporator for 2 hours, a capsule solution containing liquid crystal capsules was obtained.

### <Experimental Example>

The physical properties of the liquid crystal capsules or capsule solutions obtained in the said Examples and Comparative Example were measured by the following methods, and the results are shown in Table 1.

### 1. Physical properties of liquid crystal capsule film

### (1) Thickness (µm)

A capsule solution was coated on an ITO of a PET-ITO film with a film applicator, and then dried at 70 °C for 2 hours to manufacture a liquid crystal capsule film. The thickness of the liquid crystal capsule film was measured through an Alpha step (KLA TENCOR).

### (2) ΔHaze_{high voltage} (%)

After laminating an ITO surface of a PET-ITO film (GMP Co., Ltd., EXCELAM-SMART 655) on top of the liquid crystal capsule film, an electrode tape was attached to the ITO surface, and haze of the liquid crystal capsule film to which a voltage was applied through a function generator was measured through a haze meter (Nippon Denshoku Co., Ltd., NDH7000), and ΔHaze_{high voltage} was calculated by the following Equation 1. [Equation 1] $Δ {Haze}_{high voltage} = {Haze}_{1} \left(%\right) - {Haze}_{2} \left(%\right)$

In Equation 1, Haze₁ is the minimum haze value in an applied voltage range of 200V or less, and Haze₂ is the maximum haze value in an applied voltage range exceeding 100V.

**[Table 1]**

| Measurement results of the experimental example | | | | | | |
|---|---|---|---|---|---|---|
| Classification | Example 1 | Example 2 | Example 3 | Example 4 | Example 5 | Comparative Example 1 |
| emulsifier | Ethoxylated tetramethyl decynediol | Ethoxylated tetramethyl decynediol | polyglyceryl-10 monooleate | polyglyceryl -10 monomyristate | polyglyceryl-10 monostearate | polyglyceryl -3 polyricinoleate |
| crosslinking agent | glyoxal + HDI | glyoxal + IPDI | glyoxal + HDI | glyoxal + HDI | glyoxal + HDI | Glyoxal |
| Thickness (µm) | 19.8 | 20.6 | 23.3 | 28.8 | 29.3 | 26.1 |
| ΔHaze_{high voltage}(%) | -1.84 | -0.63 | -0.97 | -0.77 | -0.84 | -3.31 |

As shown in Table 1, the liquid crystal capsule of the Example measured a ΔHaze_{high voltage} value of -1.84% to -0.63%, which is close to 0. Accordingly, it was confirmed that an excellent haze variation rate may be realized by maintaining durability without the capsule bursting even at high voltage.

### <Reference Experimental Example>

Physical properties were measured by the following methods for the liquid crystal capsules or capsule solutions obtained in said Comparative Example and the following Reference Examples, and the results are shown in Table 2.

### Reference Example 1

0.25 g of polyglyceryl-10 monooleate (Cas number: 79665-93-3; weight average molecular weight: 1203.399 g/mol) as an emulsifier was added to an aqueous solution in which 0.65 g of polyvinyl alcohol (PVA) and 46.5 g of water were mixed, and dissolved by stirring. Thereafter, 2.3 g of liquid crystals (dielectric anisotropy (Δε) 15.8, refractive index anisotropy (Δn) 0.2235) was added, and then emulsification was performed at 4,000 rpm for 30 minutes through an IKA homogenizer T25 to form droplets.

Thereafter, under stirring, the temperature of the solution was raised to 40 °C, whereupon PVA was caused to be adsorbed onto a droplet surface for 18 hours.

Thereafter, 1.6 g of a 40% glyoxal aqueous solution was added as a crosslinking agent, and the pH of the solution was adjusted to 3, whereupon the adsorbed PVA was crosslinked at 40 °C for 18 hours.

After concentrating the solution with a rotary evaporator for 1 hour, a capsule solution containing liquid crystal capsules was obtained.

### Reference Example 2

0.25 g of polyglyceryl-10 monomyristate (Cas number: 87390-32-7; weight average molecular weight: 969.16 g/mol) as an emulsifier was added to an aqueous solution in which 0.65 g of polyvinyl alcohol (PVA) and 46.5 g of water were mixed, and dissolved by stirring. Thereafter, 2.3 g of liquid crystals (dielectric anisotropy (Δε) 15.8, refractive index anisotropy (Δn) 0.2235) was added, and then emulsification was performed at 6,000 rpm for 30 minutes through an IKA homogenizer T25 to form droplets.

Thereafter, under stirring, the temperature of the solution was raised to 40 °C, and PVA was adsorbed onto the droplet surface for 18 hours.

Thereafter, 0.8 g of a 40% glyoxal aqueous solution was added as a crosslinking agent, and the pH of the solution was adjusted to 3, and the adsorbed PVA was crosslinked at 40 °C for 18 hours.

After concentrating the solution with a rotary evaporator for 1 hour, a capsule solution comprising liquid crystal capsules was obtained.

### Reference Example 3

A liquid crystal capsule and a capsule solution were manufactured in the same manner as in the Reference Example 1, except that polyglyceryl-10 monostearate (Cas number: 79777-30-3; weight average molecular weight: 1025.3 g/mol) was added instead of polyglyceryl-10 monooleate as the emulsifier.

### 1. Physical properties of liquid crystal capsule film

### (1) Thickness (µm)

A capsule solution was coated on the ITO of a PET-ITO film with a film applicator, and then dried at 70 °C for 2 hours to manufacture a liquid crystal capsule film. The thickness of the liquid crystal capsule film was measured using an Alpha step (KLA TENCOR).

### (2) ΔHaze(%), threshold voltage (V)

After laminating the ITO surface of a PET-ITO film on top of the liquid crystal capsule film (using GMP's EXCELAM-SMART 655), electrode tape was attached to the ITO surface.

Haze_{off}(%), which is the haze of the liquid crystal capsule film with no voltage applied (i.e., haze at 0V applied voltage), and Hazeₒₙ(%), which is the haze of the liquid crystal capsule film with voltage applied via a function generator (i.e., haze at 100V applied voltage), were measured using a haze meter (Nippon Denshoku Co., Ltd., NDH7000). Based on these measurements, ΔHaze = Haze_{off}(%) - Hazeₒₙ(%) was calculated. Subsequently, a threshold voltage was obtained from the voltage corresponding to 90% of the maximum haze.

**[Table 2]**

| The measurement results of the experimental examples of the Reference Examples and the Comparative Examples | | | | |
|---|---|---|---|---|
| Classification | Reference Example 1 | Reference Example 2 | Reference Example 3 | Comparative Example 1 |
| Emulsifier | polyglyceryl-10 monooleate | polyglyceryl-10 monomyristate | polyglyceryl-10 monostearate | polyglyceryl-3 polyricinoleate |
| Thickness (µm) | 25.5 | 28.8 | 29.3 | 26.1 |
| ΔHaze(%) | 58.85 | 45.75 | 49.95 | 38.70 |
| threshold voltage (V) | 20 | 20 | 40 | 60 |

As shown in Table 2, the liquid crystal capsule of the Reference Example had a threshold voltage of 20V to 40V, which was lower than that of the Comparative Example, and a ΔHaze value of 45.75% to 58.85%, which was higher than that of the Comparative Example. Accordingly, it was confirmed that an excellent haze variation rate may be realized while being capable of driving at low voltage.

## Claims

1. A liquid crystal capsule comprising:
a core containing liquid crystal; and
a polymer shell formed on the surface of the core;
wherein the polymer shell comprises crosslinked polyvinyl alcohol with a mediating functional group including a urethane-based functional group and an acetal-based functional group.

2. The liquid crystal capsule according to claim 1,
wherein a first polyvinyl alcohol is bonded to one end of the urethane-based functional group, and a second polyvinyl alcohol is bonded to the other end.

3. The liquid crystal capsule according to claim 1,
wherein the urethane-based functional group is a functional group represented by the following Chemical Formula 1: 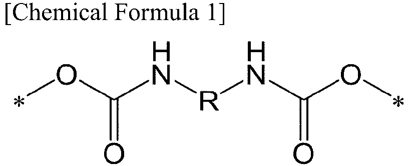
in Chemical Formula 1, R is an alkylene group having 1 to 10 carbon atoms or an arylene group having 6 to 20 carbon atoms.

4. The liquid crystal capsule according to claim 1,
wherein a first polyvinyl alcohol is bonded to one end of the acetal-based functional group, and a second polyvinyl alcohol is bonded to the other end.

5. The liquid crystal capsule according to claim 1,
wherein the acetal-based functional group comprises a diacetal group.

6. The liquid crystal capsule according to claim 5,
wherein the diacetal group is a functional group represented by the following Chemical Formula 2:

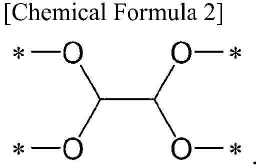

7. The liquid crystal capsule according to claim 1,
wherein the polymer shell comprises a reaction product of polyvinyl alcohol and a crosslinking agent, and the crosslinking agent comprises a polyaldehyde and a polyisocyanate.

8. The liquid crystal capsule according to claim 1,
wherein the core further comprises an emulsifier.

9. The liquid crystal capsule according to claim 1,
wherein the emulsifier comprises an acetylenic diol-based compound.

10. The liquid crystal capsule according to claim 1,
wherein the emulsifier comprises a polyglyceryl monoester compound or a polyglyceryl diester compound.

11. The liquid crystal capsule according to claim 1,
wherein the core further comprises an anisotropic dye.

12. The liquid crystal capsule according to claim 1,
wherein the core further comprises a siloxane-based additive.

13. A capsule solution comprising the liquid crystal capsule of claim 1 and a solvent.

14. An optical film comprising a binder resin and liquid crystal domains dispersed in the binder resin, and having ΔHaze_{high voltage} of -5% to -0.1% according to the following Equation 1: [Equation 1] $Δ {Haze}_{high voltage} = {Haze}_{1} \left(%\right) - {Haze}_{2} \left(%\right)$ in Equation 1, Haze₁ is the minimum haze value in the range of applied voltage of 200V or less, and Haze₂ is the maximum haze value in the range of applied voltage exceeding 100V.

15. The optical film according to claim 14,
wherein the liquid crystal domains comprise liquid crystals and an emulsifier, and the emulsifier comprises an acetylenic diol-based compound.

16. The optical film according to claim 14,
wherein the liquid crystal domains comprise liquid crystals and an emulsifier, and the emulsifier comprises a polyglyceryl monoester compound or a polyglyceryl diester compound.

17. An optical device comprising the optical film of claim 14.

18. A transmittance variable device comprising the optical film of claim 14.
